# EUROPEAN PATENT SPECIFICATION

(11) **EP 2 692 794 B1**
(45) Date of publication and mention of the grant of the patent: **25.12.2019**
(21) Application number: 12765756.7
(22) Date of filing: 02.03.2012
(51) Int. Cl.: C08K 3/22, C08K 5/3435, C08K 7/06, C08K 5/00, C08L 51/06, C08K 7/02, C08L 23/10, C08K 13/02

(54) **CARBON-FIBER REINFORCED POLYPROPYLENE RESIN COMPOSITION, MOLDING MATERIAL, AND MOLDED ARTICLES**
KOHLENSTOFFFASERVERSTÄRKTE POLYPROPYLENHARZZUSAMMENSETZUNG, FORMMASSE UND GEFORMTE GEGENSTÄNDE
COMPOSITION DE RÉSINE DE POLYPROPYLÈNE RENFORCÉE PAR DES FIBRES DE CARBONE, MATÉRIAU DE MOULAGE ET OBJETS MOULÉS

(30) Priority: 31.03.2011 JP 2011078003
(43) Date of publication of application: 05.02.2014
(73) Proprietor: Toray Industries, Inc., Tokyo 103-8666 (JP)
(72) Inventor: MOTOHASHI, Tetsuya, Aichi 4558502 (JP); NISHIMURA, Toru, Aichi 4558502 (JP); MORIYAMA, Masahiro, Aichi 4558502 (JP); MITSUTSUJI, Yuki, Aichi 4558502 (JP); MIYOSHI, Katsuhiro, Aichi 4558502 (JP)
(74) Representative: Hoefer & Partner Patentanwälte mbB
(86) International application number: PCT/JP2012/055419
(87) International publication number: WO 2012/132764

(56) References cited:
- WO-A1-2006/070859
- JP-A- 7 157 602
- JP-A- 2002 507 238
- JP-A- 2004 083 913
- JP-A- 2005 125 581
- JP-A- 2011 016 909
- JP-A- 2011 506 723
- US-A1- 2002 169 240

## Description

### TECHNICAL FIELD

The present invention relates to a carbon fiber reinforced polypropylene resin material, and more particularly relates to a carbon fiber reinforced polypropylene resin composition , a molding material and molded articles thereof having particularly good flame resistance and weather resistance as well as excellent mechanical properties.

### BACKGROUND ART

Compositions comprising reinforcement fibers and a thermoplastic resin are lightweight and have excellent mechanical properties, and thus have been widely used in sports equipment applications, aerospace applications, and general industrial applications. As reinforcement fibers used for such fiber-reinforced thermoplastic resin compositions, metal fibers such as aluminum fibers and stainless fibers, organic fibers such as aramid fibers, inorganic fibers such as silicon carbide fibers, and carbon fibers are used, and the carbon fibers are suitable in terms of the balance between specific strength, specific rigidity, and lightweight properties. Among the carbon fibers, polyacrylonitrile-based carbon fibers are suitably used.

Also for a matrix resin, lightweight polyolefin resins, in particular, polypropylene resins are increasingly demanded, and carbon fiber reinforced polypropylene resin compositions have attracted attention as a material for transport machines such as automobiles.

Exterior materials such as parts for car body construction are required to achieve light weight, high strength, and high rigidity and, at the same time, have high flame resistance and weather resistance. However, polypropylene resins are generally heat-labile and are known to be a flammable resin. Furthermore, it is known that polypropylene resins are sensitive to action of light, which action causes degradation, i.e., discoloration or reduced mechanical properties, and molded articles using a polypropylene resin as a matrix do not withstand long-term use under conditions of strong irradiation with light. In particular, providing a carbon fiber reinforced polypropylene resin composition with flame resistance/weather resistance has been poorly investigated.

### PRIOR ART DOCUMENTS

### PATENT DOCUMENTS

Patent Document 1 discloses a resin composition comprising a polyester resin, a polypropylene resin, and a graft modified-polypropylene resin in order to increase the strength and rigidity of a matrix resin.

Patent Document 2 discloses as a method of providing a polypropylene resin with flame resistance/weather resistance a flame resistant polyolefin composition obtained by blending a certain amount of benzophenone ultraviolet absorber and hydroxy benzoate light stabilizer with a composition obtained by blending a polyolefin with a halogenated flame retardant.

Patent Document 3 discloses a flame resistant polyolefin composition obtained by using both an acid adsorbent and an ultraviolet absorber for a polyolefin resin flame-retarded with a halogen compound.

Patent Document 4 discloses a radiant-material-containing resin composition that contains a polypropylene resin, a radiant material comprising aluminum particles, a hindered amine light stabilizer (HALS), and at least one compound selected from the group consisting of benzoate compounds and benzophenone compounds, thereby having a silver metallic appearance and providing a molding product with excellent light stability.

Patent Document 5 shows a flame resistant polyolefin composite sheet that contains a polyolefin resin and a certain amount of phosphate ester flame retardant and aminoether-type hindered amine stabilizer, thereby maintaining a high level of flame resistant performance over a long period of time and also having a practically sufficient sheet strength, and discloses improvement in flame resistance due to a synergistic effect of the phosphate ester flame retardant and the aminoether-type hindered amine stabilizer.
Patent Document 1: JP 08-157700 A
Patent Document 2: JP 06-128423 A
Patent Document 3: JP 05-117451 A
Patent Document 4: JP 2006-137887 A
Patent Document 5: JP 2002-337284 A

### SUMMARY OF THE INVENTION

### PROBLEMS TO BE SOLVED BY THE INVENTION

Patent Document 1 describes adding carbon fibers as a filler to the resin composition described above and blending a flame retardant. However, a mechanical property-improving effect due to the carbon fibers or a development of flame resistance are actually not specified, and, further, weather resistance is not mentioned at all.

Neither Patent Document 2 nor Patent Document 3 mentions improvement in mechanical properties due to carbon fibers.

Patent Document 4 does not specifically discuss the addition of carbon fibers.

Patent Document 5 does not describe the combination with brominated flame retardants. Furthermore, the document discloses only a material in the form of a thin layer film with a thickness on the order of micrometers, and improvement in mechanical properties due to the addition of carbon fibers is not described at all.

As described above, it has been impossible, in the prior art, to simultaneously achieve the impartment of flame resistance/weather resistance and mechanical properties in a carbon fiber reinforced polypropylene resin composition.

An object of the present invention, in view of the problems of the prior art described above, is to provide a carbon fiber reinforced polypropylene resin composition and a molding material that can provide a molded article having good flame resistance and weather resistance as well as excellent mechanical properties, and molded articles thereof.

### MEANS FOR SOLVING THE PROBLEMS

To solve the problems described above, the carbon fiber reinforced polypropylene resin composition of the present invention has the following constitution; i.e., a carbon fiber reinforced polypropylene resin composition obtained by blending based on 100 parts by weight of the total of (A) a polypropylene resin and (B) a modified-polypropylene resin with components (C) to (G) below:
(C) carbon fibers: 8 to 70 parts by weight;
(D) a brominated flame retardant: 0.4 to 25 parts by weight;
(E) an antimony oxide compound: 0.2 to 12.5 parts by weight;
(F) an aminoether-type hindered amine light stabilizer (HALS): 0.05 to 2 parts by weight, and
(G) an ultraviolet absorber: 0.05 to 2 parts by weight.

To solve the problems described above, the molding material of the present invention has the following constitution; i.e.,
a molding material obtained by dry-blending a pellet, which is obtained by melt-blending (A) a polypropylene resin, (B) a modified-polypropylene resin, (D) a brominated flame retardant, (E) an antimony oxide compound, (F) an aminoether-type hindered amine light stabilizer (HALS), and (G) an ultraviolet absorber, with a long-fiber pellet containing (A) the polypropylene resin, (B) the modified-polypropylene resin, and (C) carbon fibers, wherein the content of the components (C) to (G) in the molding material after dry-blending is in the following ranges based on 100 parts by weight of the total of the components (A) and (B).

(C) the carbon fibers: 8 to 70 parts by weight;
(D) the brominated flame retardant: 0.4 to 25 parts by weight;
(E) the antimony oxide compound: 0.2 to 12.5 parts by weight;
(F) the aminoether-type hindered amine light stabilizer (HALS): 0.05 to 2 parts by weight, and
(G) the ultraviolet absorber: 0.05 to 2 parts by weight.

To solve the problems described above, the molded article of the present invention has the following constitution; i.e.,
a molded article obtained by molding the molding material described above.

In the carbon fiber reinforced polypropylene resin composition of the present invention, the weight ratio of the component (A) to the component (B) ((A)/(B)) is preferably 95/5 to 75/25.

The molding material of the present invention is preferably a molding material obtained by coating (C) carbon fibers with a polypropylene resin composition obtained by melt-blending (A) a polypropylene resin, (B) a modified-polypropylene resin, (D) a brominated flame retardant, (E) an antimony oxide compound, (F) an aminoether-type hindered amine light stabilizer (HALS), and (G) an ultraviolet absorber, wherein the content of the components (C) to (G) in the molding material after coating is in the following ranges based on 100 parts by weight of the total of the components (A) and (B).

(C) the carbon fibers: 8 to 70 parts by weight;
(D) the brominated flame retardant: 0.4 to 25 parts by weight;
(E) the antimony oxide compound: 0.2 to 12.5 parts by weight; and
(F) the aminoether-type hindered amine light stabilizer (HALS): 0.05 to 2 parts by weight, and
(G) the ultraviolet absorber: 0.05 to 2 parts by weight.

### EFFECTS OF THE INVENTION

The carbon fiber reinforced polypropylene resin composition and the molding material of the present invention have good flame resistance and weather resistance as well as good interfacial adhesion between carbon fibers and a polypropylene resin, and, therefore, provide a molded article with excellent mechanical properties such as flexural properties and impact resistance. Furthermore, the carbon fiber reinforced polypropylene resin composition and the molding material of the present invention also have lightweight properties because of using a polypropylene resin. The carbon fiber reinforced propylene-based resin composition, the molding material, and the molded articles of the present invention are extremely useful for various parts/members such as parts, internal members, and housings of electrical and electronic equipment, office automation equipment, household electrical appliances, and automobiles.

### BEST MODE FOR CARRYING OUT THE INVENTION

In the present invention, (A) the polypropylene resin refers to an unmodified polypropylene resin, specific examples of which include a homopolymer of propylene and a copolymer of propylene and at least one α-olefin, conjugated diene, unconjugated diene, or the like. Examples of monomer repeating units constituting the α-olefin include C₂-C₁₂ α-olefins excluding propylene, such as ethylene, 1-butene, 3-methyl-1-butene, 4-methyl-1-pentene, 3-methyl-1-pentene, 4-methyl-1-hexene, 4,4-dimethyl-1-hexene, 1-nonene, 1-octene, 1-heptene, 1-hexene, 1-decene, 1-undecene, and 1-dodecene, and examples of monomer repeating units constituting the conjugated diene and the unconjugated diene include butadiene, ethylidene norbornene, dicyclopentadiene, and 1,5-hexadiene. One or more of these other monomer repeating units may be selected.

Examples of the backbone structure of (A) the polypropylene resin include a homopolymer of propylene, a random or block copolymer of propylene and one or more of the other monomers described above, and a copolymer with another thermoplastic monomer. Preferred examples thereof include polypropylene, ethylene/propylene copolymer, propylene/1-butene copolymer, and ethylene/propylene/1-butene copolymer.

The unmodified polypropylene resin is generally structurally stable and therefore has excellent balance between flame resistance and mechanical properties. When rigidity, in particular, is required, a homopolymer of propylene is used, and when impact properties are required, a random or block polypropylene of propylene and one or more of the other monomers described above is used.

In the present invention, (B) the modified-polypropylene resin is preferably an acid modified-polypropylene resin, a polypropylene resin having a group of carboxylic acid and/or a salt thereof bonded to the polymer chain. The acid modified-polypropylene resin can be obtained by various methods, for example, graft polymerization of (A) the polypropylene resin with a monomer having an carboxylic acid group that is neutralized or not neutralized and/or a monomer having a carboxylic acid ester that is saponificated or not saponificated.

Examples of the monomer having an carboxylic acid group that is neutralized or not neutralized and the monomer having a carboxylic acid ester group that is saponificated or not saponificated include ethylenically unsaturated carboxylic acids, anhydrides thereof, esters thereof, and, further, compounds having an unsaturated vinyl group other than olefins.

Examples of ethylenically unsaturated carboxylic acids include (meth)acrylic acid, maleic acid, fumaric acid, tetrahydrophthalic acid, itaconic acid, citraconic acid, crotonic acid, and isocrotonic acid, and examples of anhydrides thereof include Nadic acid TM (*endocis*-bicyclo[2,2,1]hept-5-ene-2,3-dicarboxylic acid), maleic anhydride, and citraconic anhydride.

Examples of monomers having an unsaturated vinyl group other than olefins include (meth)acrylic acid esters such as methyl (meth)acrylate, ethyl (meth)acrylate, propyl (meth)acrylate, *n*-butyl (meth)acrylate, *iso*-butyl (meth)acrylate, *tert-butyl* (meth)acrylate, *n*-amyl (meth)acrylate, isoamyl (meth)acrylate, *n*-hexyl (meth)acrylate, 2-ethylhexyl (meth)acrylate, octyl (meth)acrylate, decyl (meth)acrylate, dodecyl (meth)acrylate, octadecyl (meth)acrylate, stearyl (meth)acrylate, tridecyl (meth)acrylate, lauroyl (meth)acrylate, cyclohexyl (meth)acrylate, benzyl (meth)acrylate, phenyl (meth)acrylate, isoboronyl (meth)acrylate, dicyclopentanyl (meth)acrylate, dicyclopentenyl (meth)acrylate, dimethylaminoethyl (meth)acrylate, and diethylaminoethyl (meth)acrylate; hydroxyl group-containing vinyls such as hydroxyethyl acrylate, 2-hydroxyethyl (meth)acrylate, 2-hydroxypropyl (meth)acrylate, 4-hydroxybutyl acrylate, lactone-modified hydroxyethyl (meth)acrylate, and 2-hydroxy-3-phenoxypropyl acrylate; epoxy group-containing vinyls such as glycidyl (meth)acrylate and methylglycidyl (meth)acrylate; isocyanate group-containing vinyls such as vinyl isocyanate and isopropenyl isocyanate; aromatic vinyls such as styrene, α-methylstyrene, vinyl toluene, and *t*-butyl styrene; amides such as acrylamide, methacrylamide, *N*-methylol methacrylamide, *N*-methylolacrylamide, diacetone acrylamide, and maleic acid amide; vinyl esters such as vinyl acetate and vinyl propionate; aminoalkyl (meth)acrylates such as *N,N* dimethylaminoethyl (meth)acrylate, *N,N-*diethylaminoethyl (meth)acrylate, imethylaminopropyl (meth)acrylate, *N,N-*dipropylaminoethyl (meth)acrylate, *N,N* dibutylaminoethyl (meth)acrylate, and *N,N-*dihydroxyethylaminoethyl (meth)acrylate; unsaturated sulfonic acids such as styrene sulfonic acid, styrene sulfonic acid soda, and 2-acrylamide-2-methylpropane sulfonic acid; and unsaturated phosphoric acids such as mono(2-methacryloyloxy ethyl) acid phosphate and mono(2-acryloyloxy ethyl) acid phosphate.

These monomers can be used alone or in combination of two or more thereof. Among them, acid anhydrides are preferred, and, particularly, maleic anhydride is preferred.

In the present invention, to improve the mechanical properties of a molded article, (B) the modified-polypropylene resin is used together with (A) the polypropylene resin, and particularly in terms of the balance between flame resistance and mechanical properties, it is preferable to use (A) the polypropylene resin and (B) the modified-polypropylene resin such that the weight ratio (A)/(B) is 95/5 to 75/25, more preferably 95/5 to 80/20, and still more preferably 90/10 to 80/20.

The use of (A) the polypropylene resin alone provides excellent rigidity and impact properties but results in reduced strength because of not having a functional group effective for adhesion to the carbon fiber surface. The use of (B) the modified-polypropylene resin alone provides improved strength but results in reduced impact properties or reduced flame resistance due to the ease of structural decomposition.

Examples of (C) the carbon fibers used in the present invention include carbon fibers such as PAN-based carbon fibers, pitch-based carbon fibers, and rayon-based carbon fibers. In terms of the balance between the strength and elastic modulus of a resulting molded article, PAN-based carbon fibers are preferred. Furthermore, to provide conductivity, reinforcement fibers coated with a metal such as nickel, copper, or ytterbium can also be used.

Furthermore, the carbon fibers preferably have a surface oxygen concentration ratio (O/C), the ratio of the number of atoms of oxygen (O) to the number of atoms of carbon (C) on the fiber surface measured by X-ray photoelectron spectroscopy, of 0.05 to 0.5, more preferably 0.08 to 0.4, and still more preferably 0.1 to 0.3. When the surface oxygen concentration ratio is not less than 0.05, the amount of functional group on the carbon fiber surface can be ensured, and stronger adhesiveness can be obtained. Although the upper limit of the surface oxygen concentration ratio is not particularly limited, it is generally not more than 0.5 in terms of the balance between the handleability and productivity of the carbon fibers.

The surface oxygen concentration ratio of the carbon fibers is determined by X-ray photoelectron spectroscopy according to the following procedure. First, a carbon fiber filament from which a sizing agent and the like attached to the carbon fiber surface have been removed with a solvent is cut into 20-mm lengths, and spread on a sample support made of copper. Thereafter, using AlKα1, 2 as an X-ray source, the inside of a sample chamber is kept at 1 × 10⁻⁸ Torr. As a correction value of a peak associated with electrification during the measurement, the kinetic energy value (K.E.) of the main peak of C 1s is set at 1202 eV. The C 1s peak area is determined by drawing a straight baseline in the K.E. range of 1191 to 1205 eV. The O 1s peak area is determined by drawing a straight baseline in the K.E. range of 947 to 959 eV.

The surface oxygen concentration ratio is calculated as a ratio of the number of atoms from the ratio of the O 1s peak area to the C 1s peak area using an apparatus-specific sensitivity correction value. As an X-ray photoelectron spectroscopy apparatus, Model ES-200 manufactured by KOKUSAI DENKI CO. is used, and the sensitivity correction value is 1.74.

Examples of methods of controlling the surface oxygen concentration ratio (O/C) at 0.05 to 0.5 include, but are not limited to, methods such as electrolytic oxidation, chemical oxidation, and gas phase oxidation, among which electrolytic oxidation is preferred.

The average fiber diameter of the carbon fibers, in terms of the mechanical properties and surface appearance of a resulting molded article, is preferably in the range of 1 to 20 µm, more preferably in the range of 3 to 15 µm, but is not limited thereto. When used as a reinforcement fiber filament, the number of single fibers is not restricted and can be in the range of 100 to 350,000, and the use in the range of 1,000 to 250,000 is particularly preferred. In terms of efficiency in producing reinforcement fibers, the number of single fibers is preferably large, and the use in the range of 20,000 to 100,000 is preferred.

(C) the carbon fibers used in the present invention are preferably carbon fibers that are sized with a polyfunctional compound. Examples of the polyfunctional compound that can be used include, but are not limited to, compounds having two or more functional groups such as epoxy, urethane, amino, and carboxyl in one molecule, and these may be used alone or in combination or two or more thereof. When the number of functional groups is two or more, adhesiveness between reinforcement fibers and a matrix resin can be fully exhibited. Therefore, the number of functional groups is preferably two or more, and still more preferably three or more.

Specific examples of the compound include a polyfunctional epoxy resin, acid modified-polypropylene, and neutralized acid modified-polypropylene.

Examples of polyfunctional epoxy resins include bisphenol A epoxy resins, bisphenol F epoxy resins, aliphatic epoxy resins, and phenol novolac epoxy resins. Among them, aliphatic epoxy resins, which readily exhibit adhesiveness to a matrix resin, are preferred. In general, an epoxy resin, when having a large number of epoxy groups, will have a high crosslink density after cross-linking reaction, and, consequently, tends to have a structure with low toughness. Even if the epoxy resin is present between reinforcement fibers and a matrix resin, they are readily detached due to the brittleness, and the strength of a fiber-reinforced composite material may not be exhibited. However, aliphatic epoxy resins, because of their flexible backbone, are likely to have a structure with high toughness despite high crosslink density. When an aliphatic epoxy resin is present between reinforcement fibers and a matrix resin, they are not readily detached due to the flexibility, and, consequently, the strength of a fiber-reinforced composite material is likely to be improved, which is preferred. Specific examples of aliphatic epoxy resins include diglycidyl ether compounds such as ethylene glycol diglycidyl ether, polyethylene glycol diglycidyl ethers, propylene glycol diglycidyl ether, polypropylene glycol diglycidyl ethers, 1,4-butanediol diglycidyl ether, neopentyl glycol diglycidyl ether, polytetramethylene glycol diglycidyl ether, and polyalkylene glycol diglycidyl ethers; and polyglycidyl ether compounds such as glycerol polyglycidyl ether, diglycerol polyglycidyl ether, polyglycerol polyglycidyl ethers, sorbitol polyglycidyl ethers, arabitol polyglycidyl ethers, trimethylolpropane polyglycidyl ethers, trimethylolpropane glycidyl ethers, pentaerythritol polyglycidyl ethers, and polyglycidyl ethers of aliphatic polyhydric alcohols.

Among the aliphatic epoxy resins, aliphatic polyglycidyl ether compounds having a large number of highly reactive glycidyl groups are preferred. Among them, glycerol polyglycidyl ether, diglycerol polyglycidyl ether, polyethylene glycol glycidyl ethers, and polypropylene glycol glycidyl ethers are more preferred. The aliphatic polyglycidyl ether compounds are preferred because they have good balance between flexibility, crosslink density, and compatibility with a matrix resin and effectively improve adhesiveness.

Examples of the acid modified-polypropylene and the neutralized acid modified-polypropylene include those having a polymer main chain mainly composed of hydrocarbons such as propylene and a side chain containing a carboxyl group formed from unsaturated carboxylic acid or a metal salt and ammonium salt thereof. The polymer main chain may be a random copolymer obtained by copolymerizing propylene with unsaturated carboxylic acid or a graft copolymer obtained by grafting unsaturated carboxylic acid onto propylene. Furthermore, copolymerizable copolymer components such as α-olefins, conjugated dienes, unconjugated dienes and 1-butene may be copolymerized. The acid modified-polypropylene and the neutralized acid modified-polypropylene are flexible despite having a large number of functional groups in one molecule, and, in addition, their back bone is polypropylene similarly to a matrix resin, whereby good compatibility with the matrix resin is provided, and adhesiveness is readily improved, which is preferred.

Examples of unsaturated carboxylic acids include acrylic acid, methacrylic acid, maleic acid, fumaric acid, itaconic acid, crotonic acid, isocrotonic acid, citraconic acid, allyl succinic acid, mesaconic acid, glutaconic acid, nadic acid, methyl nadic acid, tetrahydrophthalic acid, and methyltetrahydrophthalic acid. In particular, maleic acid, acrylic acid, and methacrylic acid are preferred because of high copolymerization reactivity. The unsaturated carboxylic acid used for copolymerization with propylene or graft copolymerization onto propylene may be alone, or two or more unsaturated carboxylic acids may be used. In the neutralized acid modified-polypropylene, at least some of the carboxyl groups are preferably neutralized with metal cations, for example, of Na, K, Li, Mg, Zn, Ca, Cu, Fe, Ba, and Al, or ammonium ions.

In order to have two or more functional groups, per 1 g of acid modified-polypropylene or neutralized acid modified-polypropylene, the total amount is preferably 0.05 to 5 mmol equivalent in terms of the group represented by -C(=O)-O-, more preferably 0.1 to 4 mmol equivalent, and still more preferably 0.3 to 3 mmol equivalent. Examples of methods of analyzing the content of the carboxylic acid salt as described above include quantitative detection of metal species forming the salt using inductively coupled plasma atomic emission spectrometry and quantitative determination of carbonyl carbon in the carboxylic acid salt using IR, NMR, elemental analysis, and the like. When the total amount in terms of the group represented by -C(=O)-O- is in the preferred range described above, adhesiveness is readily exhibited, while acid modified-polypropylene or neutralized acid modified-polypropylene will not be brittle.

By providing the polyfunctional compound as a sizing agent to reinforcement fibers, even when added in small amounts, adhesiveness and composite overall properties can be improved by effectively adapting to surface properties such as functional groups on the reinforcement fiber surface. In addition, the occurrence of fuzz and yarn breakage is reduced in high-order processing by improving bundling properties, flex resistance, and abrasion resistance; thus, the polyfunctional compound can also improve high-order processability as so-called paste and a bundling agent.

The amount of sizing agent attached is preferably 0.01% by mass to 10% by mass, more preferably 0.05% by mass to 5% by mass, and still more preferably 0.1% by mass to 2% by mass, based on the mass of the reinforcement fibers alone. The amount of sizing agent attached in the above preferred range will produce a sufficient adhesiveness-improving effect and will not degrade the physical properties of the matrix resin.

Furthermore, other components such as bisphenol epoxy compounds, linear low-molecular-weight epoxy compounds, polyethylene glycol, polyurethane, polyester, emulsifiers, or surfactants may be added to the sizing agent for the purpose of viscosity control, abrasion resistance improvement, fuzz resistance improvement, bundling property improvement, high-order processability improvement, and the like.

Examples of methods of providing a sizing agent include, but are not limited to, immersing in a sizing solution via a roller, contacting with a roller to which a sizing solution is attached, and spraying a sizing solution in the form of a mist. A batch method or a continuous method may be used, but the continuous method, which enables good productivity and small variation, is preferred. In such cases, it is preferable to control sizing solution concentration, temperature, yarn tension, and the like such that active ingredients in a sizing agent are attached to reinforcement fibers uniformly in an amount in an appropriate range. Furthermore, exciting reinforcement fibers with ultrasonic waves when providing a sizing agent is more preferred.

Although drying temperature and drying time should be adjusted depending on the amount of the compound to be attached, in order to completely remove solvent used to provide a sizing agent, shorten the time required for drying, and, at the same time, prevent thermal degradation of the sizing agent to thereby prevent solidification of a reinforcement fiber filament formed from sized carbon fibers which leads to deteriorated spreadability of a bundle, the drying temperature is preferably 150°C to 350°C, and more preferably 180°C to 250°C.

Examples of solvents used for a sizing agent include water, methanol, ethanol, dimethylformamide, dimethylacetamide, and acetone, among which water is preferred in terms of ease of handling and disaster prevention. Thus, when using as a sizing agent a compound insoluble or poorly soluble in water, it is preferable to add emulsifiers and surfactants to use the compound dispersed in water. Specific examples of emulsifiers and surfactants that can be used include anionic emulsifiers such as styrene-maleic anhydride copolymer, olefin-maleic anhydride copolymer, naphthalene sulfonic acid formalin condensate, and sodium polyacrylate; cationic emulsifiers such as polyethyleneimine and polyvinyl imidazoline; and nonionic emulsifiers such as nonylphenol ethylene oxide adducts, polyvinyl alcohol, polyoxyethylene ether ester copolymer, and sorbitan ester ethyl oxide adducts, among which the nonionic emulsifiers, which cause little interaction, are preferred because the adhesive effect of a polyfunctional compound is not readily inhibited.

The amount of (C) the carbon fibers is 8 to 70 parts by weight, preferably 10 to 60 parts by weight, and more preferably 15 to 50 parts by weight, based on 100 parts by weight of the total of (A) the polypropylene resin and (B) the modified-polypropylene resin. If the amount of (C) the carbon fibers is less than 8 parts by weight, mechanical properties of a molded article can be insufficient. If it is more than 70 parts by weight, flowability can be decreased during molding processing such as injection molding, and the surface grade of a molded article can be degraded.

As (D) the brominated flame retardant used in the present invention, known brominated flame retardants can be used. Representative examples thereof include decabromodiphenyl ether, tetrabromobisphenol A, tetrabromobisphenol S, 1,2-bis(2',3',4',5',6'-pentabromophenyl)ethane, 1 ,2-bis(2,4,6-tribromophenoxy)ethane, 2,4,6-tris(2,4,6-tribromophenoxy)-1,3,5-triazine, 2,6-dibromophenol, 2,4-dibromophenol, brominated polystyrene, ethylenebistetrabromophthalimide, hexabromocyclododecane, hexabromobenzene, pentabromobenzyl acrylate, 2,2-bis[4'(2",3"-dibromopropoxy)-,3 ',5'-dibromophenyl]-propane, bis(3,5-dibromo,4-dibromopropoxyphenyl)sulfone, and tris(2,3-dibromopropyl)isocyanurate. These may be used alone or in combination of two or more thereof.

The amount of (D) the brominated flame retardant is 0.4 to 25 parts by weight, and preferably 5 to 15 parts by weight, based on 100 parts by weight of the total of (A) the polypropylene resin and (B) the modified-polypropylene resin. If the amount of (D) brominated flame retardant is less than 0.4 parts by weight, a sufficient flame-retardant effect cannot be produced. If it is more than 25 parts by weight, reduced mechanical properties, increased specific gravity of a molded article, and bleeding out of the flame retardant from the molded article surface can be caused.

As (E) the antimony oxide compound used in the present invention, known antimony oxide compounds can be used. Representative examples thereof include antimony trioxide, antimony tetroxide, and antimony pentoxide. These may be used alone or in combination of two or more thereof.

The amount of (E) the antimony oxide compound is 0.2 to 12.5 parts by weight, and preferably 2.5 to 7.5 parts by weight, based on 100 parts by weight of the total of (A) the polypropylene resin and (B) the modified-polypropylene resin. If 25 the amount of (E) the antimony oxide compound is less than 0.2 parts by weight, a sufficient flame-retardant effect cannot be produced. If it is more than 12.5 parts by weight, reduced mechanical properties and increased specific gravity of a molded article can be caused.

(F) the aminoether-type hindered amine light stabilizer (HALS) used in the present invention refers to a hindered amine light stabilizer (HALS) having a structure represented by Formula (1) below in the compound, representative examples of which include Tinuvin 123, Tinuvin 152, Tinuvin NOR 371 FF, Tinuvin XT850 FF, Tinuvin XT855 FF, Flamestab NOR 116 FF available from BASF Japan Ltd., and ADK STAB LA-81 available from ADEKA CORPORATION. These may be used alone or in combination of two or more thereof. 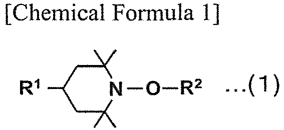 (wherein R¹ includes any structure other than hydrogen, and R² includes at least one structure among alkyl, cycloalkyl, alkyl carbonyl, and cycloalkyl carbonyl. The number of carbon atoms in R² is preferably 5 to 12.)

The aminoether-type hindered amine light stabilizer (HALS) is oxidized, for example, by oxygen or ultraviolet rays to produce nitro oxide radicals, which trap alkyl radicals produced in the polypropylene resin to form an aminoether (-NOR) structure, and further trap alkyl radicals and peroxide radicals to thereby retain weather resistance.

In the process for burning a resin composition, pyrolysis, which causes generation of flammable gas, is known to be a chain reaction associated with active radicals. In this process, the aminoether-type hindered amine light stabilizer (HALS), during burning, produces nitro oxide radicals as described above, which trap/inactivate active radicals and exhibit flame resistance. The flame resistance at this time is synergistically improved by using brominated flame retardants in combination. The reason why such a mechanism works, though not necessarily clear, is presumably that nitro oxide radicals derived from the aminoether-type hindered amine light stabilizer (HALS) promote the radical-trapping effect of the brominated flame retardants and act equivalently to so-called flame retardant adjuvants such as antimony oxide compounds.

In contrast, non-aminoether-type hindered amine light stabilizers (HALS) having an NH or NR (R: alkyl) structure are an amine compound, and, therefore, they undergo a neutralization reaction when subjected to acid attack, whereby the effect as an anti-weathering agent is reduced. Therefore, in such cases where a halogenated flame retardant is used in combination as in the present invention, the weather resistance-improving effect will be lost, which is not preferred. In addition, some non-aminoether-type hindered amine light stabilizers require much time to produce nitro oxide radicals due to their structure, and peroxide radicals sometimes cannot be trapped in the polypropylene resin, which is not preferred.

The amount of (F) the aminoether-type hindered amine light stabilizer (HALS) is 0.05 to 2 parts by weight based on 100 parts by weight of the total of (A) the polypropylene resin and (B) the modified-polypropylene resin. If the amount of (F) the aminoether-type hindered amine light stabilizer (HALS) is less than 0.05 parts by weight, sufficient weather resistance cannot be provided, and a synergistic effect with flame retardants sometimes cannot be exerted, which can result in insufficient flame resistance. If it is more than 2 parts by weight, mechanical properties of a molded article can be reduced, or the light stabilizer itself can be a source of decomposition gas, resulting in reduced flame resistance.

In the present invention, in addition to the components (A) to (F), (G) an ultraviolet absorber is further added because the combination with the aminoether-type hindered amine light stabilizer (HALS) can produce a synergistic effect in improvement in weather resistance and flame resistance. In the present invention, known ultraviolet absorbers can be used, examples of which include benzotriazole ultraviolet absorbers, cyanoacrylate ultraviolet absorbers, triazine ultraviolet absorbers, benzophenone ultraviolet absorbers, and oxalic acid anilide ultraviolet absorbers.

The amount of (G) the ultraviolet absorber is 0.05 to 2 parts by weight based on 100 parts by weight of the total of (A) the polypropylene resin and (B) the modified-polypropylene resin. When the amount of (G) the ultraviolet absorber is in this range, mechanical properties will not be reduced, or flame resistance will not be reduced.

Furthermore, other fillers and additives may be contained in the carbon fiber reinforced polypropylene resin composition of the present invention as long as the object of the present invention is not impaired. Examples thereof include inorganic fillers, conductivity-imparting agents, crystal nucleating agents, antioxidants, vibration dampers, antimicrobial agents, insect repellents, deodorizers, stain inhibitors, heat stabilizers, mold releasing agents, antistatic agents, plasticizers, lubricants, coloring agents, pigments, dyes, foaming agents, foam suppressors, and coupling agents.

Examples of forms of the molding material of the carbon fiber reinforced polypropylene resin composition in the present invention that can be used include pellets, stampable sheets, prepregs, SMC, and BMC, and the most desirable molding material is a pellet used for injection molding. The pellet generally refers to a pellet obtained by kneading of the desired amount of resin, fillers, and chopped fibers or continuous fibers in an extruder, extrusion, and pelletization. In particular, when carbon fibers are used, the pellet mentioned above has a fiber length in the pellet that is shorter than the length in the longer direction of the pellet, and the pellet in the present invention includes a long-fiber pellet, which can be preferably used.

Such a long-fiber pellet refers to a pellet in which fibers are aligned substantially parallel to the longer direction of the pellet and the fiber length in the pellet is equal to or more than the pellet length, as shown in JP 63-37694 B. The long-fiber pellet preferably has a length in the longer direction of 1 to 50 mm, and more preferably 3 to 20 mm.
In the long-fiber pellet, a fiber filament may be impregnated or coated with a resin. In particular, in the case of a long-fiber pellet in which a fiber filament is coated with a resin, the fiber filament may be preliminarily impregnated with a resin having a viscosity (or a molecular weight) equal to or lower than that of the coating resin.

The amount of resin impregnated into or applied to the fiber filament is preferably 50 to 1,900 parts by weight, and more preferably 150 to 900 parts by weight, based on 100 parts by weight of the fiber filament.

When a resin having a low viscosity (or a low molecular weight) is used in combination, the amount of the resin having a low viscosity (or a low molecular weight) is preferably 10 to 40 parts by weight based on 100 parts by weight of the carbon fibers.

When the long-fiber pellet described above is used for molding, the fiber length in a molded article will be long compared to the pellet having a fiber length in the pellet that is shorter than the length in the longer direction of the pellet, and the mechanical properties will be excellent. Therefore, the long-fiber pellet is preferably used.

Thus, in the present invention, in terms of handleability and ease of composition change, it is preferable to obtain a molding material by dry-blending a pellet obtained by melt-blending the components (A), (B), (D), (E), (F) and by blending this melt-blended pellet further with the component (G) with a long-fiber pellet containing the components (A), (B), and (C). In the present invention, dry-blending refers, unlike melt-blending, to mixing the melt-blended pellet and the long-fiber pellet with stirring to form a substantially uniform pellet.

Furthermore, in the present invention, it is preferable to obtain a molding material by coating the component (C) with a polypropylene resin composition obtained by melt-blending the components (A), (B), (D), (E), (F) and (G). This means that, in the long-fiber pellet described above, the resin applied to the carbon fibers is a polypropylene resin composition obtained by melt-blending the components (A), (B), (D), (E), (F) and by further melt-blending the component (G), which is preferred because of excellent productivity and handleability due to continuous production, and, in addition, high homogeneity of the resin composition around the carbon fibers.

Examples of methods of molding the carbon fiber reinforced polypropylene resin composition and the molding material of the present invention include injection molding, press molding, transfer molding, and combinations thereof, and injection molding is preferably used because of excellent molding efficiency.

The molded articles are suitable for automotive parts such as instrument panels, door beams, underside covers, lamp housings, pedal housings, radiator supports, spare tire covers, various modules, for example, at front end, and the like. The molded articles are also suitable for parts of home and office appliances such as telephones, facsimiles, VTR, copying machines, televisions, microwave ovens, audio equipment, toiletry goods, refrigerators, and air conditioners. Furthermore, the molded articles are suitable for housings used, for example, in personal computers and cellular phones, members for electrical and electronic equipment typified by keyboard supports which are members for supporting a keyboard inside a personal computer, and the like. Because of using conductive carbon fibers as reinforcement fibers, such members for electrical and electronic equipment are provided with electromagnetic shielding properties, which is more preferred.

### EXAMPLES

The present invention will now be described in detail by way of example, but the present invention is not limited to the following examples.

### (1) Flexural Test

Flexural strength was measured in accordance with ISO 178 using a 3-point flexural testing jig (indenter radius: 5 mm) at a fulcrum distance of 64 mm under test conditions of a testing speed of 2 mm/min. "Instron (registered trademark)" Universal Tester 5566 Model (manufactured by Instron Corporation) was used as a tester.

### (2) Charpy Impact Test

Notched Charpy impact tests were performed in accordance with ISO 179 under conditions of a test temperature of 23°C. A Charpy tester RESIL25 manufactured by CEAST was used. For the test piece size, test pieces with a thickness of 4 mm, a width of 10 mm, and a length of 80 mm were used. For temperature adjustment, a temperature chamber, Model PU-1K, manufactured by TABAI Corp. was used. The test pieces were allowed to stand in the temperature chamber at a constant temperature for 40 min or more, and then the tests were performed.

### (3) Flame Resistance

In accordance with FMVSS No. 302 Combustion Test, using a square plate having a size of 100 mm × 150 mm × 3 mmt, a 38 mm high gas burner flame was brought into contact with an edge of the square plate until ignition, and self-extinguishing properties until the flame spread from the edge to a marked line were measured.
Assessment was performed according to the following criteria, and a, b, and c were evaluated as acceptable.
a: After ignition by bringing a flame into contact, the flame was self-extinguished in 30 seconds.
b: After ignition by bringing a flame into contact, the flame was self-extinguished in 30 seconds to 3 minutes.
c: After ignition by bringing a flame into contact, the flame was self-extinguished in 3 to 7 minutes.
f: The flame was not self-extinguished, or the flame was spread to the marked line in 7 minutes after ignition.

### (4) Weather Resistance

Using a UV Long-Life Fade Meter (manufactured by Suga Test Instruments Co., Ltd.), a square plate having a size of 100 mm × 100 mm × 3 mmt was photoirradiated under conditions of 83°C and no water spray cycle. When the photoirradiation time reached 500 hours, the test piece surface was observed under a digital microscope (manufactured by KEYENCE CORPORATION, Model VHX-900), and weather resistance was determined from the condition of the surface.

Assessment was performed according to the following criteria, and a, b, and c were evaluated as acceptable.
a: No cracks or roughening of the surface.
b: Countable numbers of cracks occur, but the surface texture is kept smooth.
c: Microscopic cracks occur over the whole test piece surface, and the surface texture is coarse. Carbon fibers are not exposed.
f: Innumerable cracks occur all over the test piece surface, and carbon fibers on the surface are exposed.

### (Reference Example) Production of Carbon Fibers

A copolymer mainly composed of polyacrylonitrile was spun, burnt, and subjected to a surface oxidation treatment to obtain continuous carbon fibers with a total single fiber number of 24,000, a single fiber diameter of 7 µm, a mass per unit length of 1.6 g/m, a specific gravity of 1.8 g/cm³, and a surface oxygen concentration (O/C) of 0.06. The continuous carbon fibers had a strand tensile strength of 4,880 MPa and a strand tensile modulus of 225 GPa. Next, mother liquor of a sizing agent was prepared by dissolving or dispersing polyglycerol polyglycidyl ether as a polyfunctional compound in water to 2% by weight, and the carbon fibers were provided with the sizing agent by the dipping method and dried at 230°C. The amount of sizing agent attached to the carbon fibers thus obtained was 1.0% by weight.

### (Example 1) (not claimed)

Using a twin-screw extruder, Model TEX-30α (screw diameter: 30 mm, die diameter: 5 mm, barrel temperature: 220°C, and screw speed: 150 rpm), manufactured by JSW, a pellet blend of (A) a polypropylene resin (Prime Polypro J105G resin available from Prime Polymer Co., Ltd.) and (B) a maleic acid modified-polypropylene resin (ADMER QE840 available from Mitsui Chemicals, Inc.) at a weight ratio (A)/(B) of 85/15, (D) a brominated flame retardant (Nonnen PR-2 available from MARUBISHI OIL CHEMICAL CO., LTD.), (E) antimony trioxide (available from SHOWA CHEMICAL CO., LTD.), and (F) an aminoether-type hindered amine light stabilizer (HALS) (Tinuvin 123 available from BASF Japan Ltd.) were supplied from a main hopper. While degassing from a downstream vacuum vent, the molten resin was discharged from a die port. The strand obtained was cooled and then cut with a cutter to obtain melt-blended pellets.

Furthermore, using equipment for producing a long-fiber-reinforced resin pellet, wherein a die port for coating with molten resin was placed at a discharge tip of a single-screw extruder, the extruder cylinder temperature was set at 220°C, and (A) the polypropylene resin (Prime Polypro J105G resin available from Prime Polymer Co., Ltd.) and (B) the maleic acid modified-polypropylene resin (ADMER QE840 available from Mitsui Chemicals, Inc.) were pellet-blended at a weight ratio (A)/(B) of 85/15, supplied from a main hopper, and melted at a screw speed of 200 rpm. (C) the carbon fibers obtained in Reference Example were supplied to a die port (diameter: 3 mm) for discharging molten resin. The strand coated with the resin was cooled and then cut with a pelletizer into long-fiber pellets having a pellet length of 10 mm.

The melt-blended pellets and the long-fiber pellets thus obtained were dry-blended such that the content of (C), (D), (E), and (F) based on 100 parts by weight of the total of the components (A) and (B) was as described below to obtain a molding material.

(C) the carbon fibers: 30 parts by weight;
(D) the brominated flame retardant: 5 parts by weight;
(E) the antimony oxide compound: 2.5 parts by weight; and
(F) the aminoether-type hindered amine light stabilizer (HALS): 0.3 parts by weight.

Next, the dry-blended molding material obtained was molded into a test piece (molded article) for property evaluation using an injection molding machine, Model SE75DUZ-C250, manufactured by Sumitomo Heavy Industries, Ltd. under the conditions of injection time: 10 seconds, holding pressure: the lower limit of molding pressure +10 MPa, pressure holding time: 10 seconds, cylinder temperature: 230°C, and mold temperature: 60°C. The test piece obtained was allowed to stand in a constant temperature and humidity room controlled at a temperature of 23°C and 50% RH for 24 hours, and then subjected to a property evaluation test. Next, the test piece (molded article) for property evaluation obtained was evaluated according to the methods for evaluating an injection molded article described in (1) to (4) above. The evaluation results were summarized in Table 1.

### (Example 2) (not claimed)

Using equipment for producing a long-fiber-reinforced resin pellet, wherein a die port for coating with molten resin was placed at a discharge tip of a single-screw extruder, the extruder cylinder temperature was set at 220°C, and a pellet blend of (A) a polypropylene resin (Prime Polypro J105G resin available from Prime Polymer Co., Ltd.) and (B) a maleic acid modified-polypropylene resin (ADMER QE840 available from Mitsui Chemicals, Inc.) at a weight ratio (A)/(B) of 85/15, (D) a brominated flame retardant (Nonnen PR-2 available from MARUBISHI OIL CHEMICAL CO., LTD.), (E) antimony trioxide (available from SHOWA CHEMICAL CO., LTD.), and (F) an aminoether-type hindered amine light stabilizer (HALS) (Tinuvin 123 available from BASF Japan Ltd.) were supplied from a main hopper, and melted at a screw speed of 200 rpm. (C) the carbon fibers obtained in Reference Example were supplied to a die port (diameter: 3 mm) for discharging molten resin. The strand coated with the resin was cooled and then cut with a pelletizer into long-fiber pellets having a pellet length of 10 mm to obtain a molding material. For the molding material described below, the supply of each component was controlled such that the content of (C), (D), (E), and (F) based on 100 parts by weight of the total of the components (A) and (B) was as described below.

(C) the carbon fibers: 30 parts by weight;
(D) the brominated flame retardant: 5 parts by weight;
(E) the antimony oxide compound: 2.5 parts by weight; and
(F) the aminoether-type hindered amine light stabilizer (HALS): 0.3 parts by weight.

Next, the long-fiber pellet-shaped molding material obtained was molded into a test piece (molded article) for property evaluation using an injection molding machine, Model SE75DUZ-C250, manufactured by Sumitomo Heavy Industries, Ltd. under the conditions of injection time: 10 seconds, holding pressure: the lower limit of molding pressure + 10 MPa, pressure holding time: 10 seconds, cylinder temperature: 230°C, and mold temperature: 60°C. The test piece obtained was allowed to stand in a constant temperature and humidity room controlled at a temperature of 23°C and 50% RH for 24 hours, and then subjected to a property evaluation test. Next, the test piece (molded article) for property evaluation obtained was evaluated according to the methods for evaluating an injection molded article described in (1) to (4) above. The evaluation results were summarized in Table 1.

### (Example 3) (not claimed)

Molding evaluation was performed in the same manner as in Example 1 except that when dry-blending melt-blended pellets and long-fiber pellets, they were dry-blended such that the content of (C) the carbon fibers was 60 parts by weight based on 100 parts by weight of the total of the components (A) and (B). The evaluation results were summarized in Table 1.

### (Example 4) (not claimed)

Molding evaluation was performed in the same manner as in Example 1 except that when dry-blending melt-blended pellets and long-fiber pellets, they were dry-blended such that the content of (D) the brominated flame retardant was 2 parts by weight, and (E) the antimony trioxide was 1 part by weight, based on 100 parts by weight of the total of the components (A) and (B). The evaluation results were summarized in Table 1.

### (Example 5) (not claimed)

Molding evaluation was performed in the same manner as in Example 1 except that when dry-blending melt-blended pellets and long-fiber pellets, they were dry-blended such that the content of (D) the brominated flame retardant was 20 parts by weight, and (E) the antimony trioxide was 10 parts by weight, based on 100 parts by weight of the total of the components (A) and (B). The evaluation results were summarized in Table 1.

### (Example 6) (not claimed)

Molding evaluation was performed in the same manner as in Example 1 except that when dry-blending melt-blended pellets and long-fiber pellets, they were dry-blended such that the content of (F) the aminoether-type hindered amine light stabilizer (HALS) was 0.05 parts by weight based on 100 parts by weight of the total of the components (A) and (B). The evaluation results were summarized in Table 1.

### (Example 7) (not claimed)

Molding evaluation was performed in the same manner as in Example 1 except that when dry-blending melt-blended pellets and long-fiber pellets, they were dry-blended such that the content of (F) the aminoether-type hindered amine light stabilizer (HALS) was 1.5 parts by weight based on 100 parts by weight of the total of the components (A) and (B). The evaluation results were summarized in Table 1.

### (Example 8) (not claimed)

Molding evaluation was performed in the same manner as in Example 1 except that the weight ratio of the components (A) to the components (B) contained in melt-blended pellets and long-fiber pellets ((A)/(B)) was 95/5. The evaluation results were summarized in Table 1.

### (Example 9) (not claimed)

Molding evaluation was performed in the same manner as in Example 1 except that the weight ratio of the components (A) to the components (B) contained in melt-blended pellets and long-fiber pellets ((A)/(B)) was 75/25. The evaluation results were summarized in Table 1.

### (Example 10)

Molding evaluation was performed in the same manner as in Example 1 except that when producing melt-blended pellets, (G) a benzotriazole ultraviolet absorber (Tinuvin 326 available from BASF Japan Ltd.) was further added, and dry-blended such that the content of (G) the benzotriazole ultraviolet absorber was 0.3 parts by weight based on 100 parts by weight of the total of the components (A) and (B). The evaluation results were summarized in Table 1.

### (Example 11) (not claimed)

Molding evaluation was performed in the same manner as in Example 1 except that when dry-blending melt-blended pellets and long-fiber pellets, they were dry-blended such that the content of (D) the brominated flame retardant was 0.5 parts by weight, and (E) the antimony trioxide was 0.25 parts by weight, based on 100 parts by weight of the total of the components (A) and (B). The evaluation results were summarized in Table 1.

### (Example 12)

Molding evaluation was performed in the same manner as in Example 1 except that when producing melt-blended pellets, (G) a benzotriazole ultraviolet absorber (Tinuvin 326 available from BASF Japan Ltd.) was further added, and dry-blended such that the content of (G) the benzotriazole ultraviolet absorber was 2 parts by weight based on 100 parts by weight of the total of the components (A) and (B). The evaluation results were summarized in Table 1.

### (Comparative Example 1)

Molding evaluation was performed in the same manner as in Example 1 except that when producing melt-blended pellets, (F) the aminoether-type hindered amine light stabilizer (HALS) was not added. The evaluation results were summarized in Table 2.

### (Comparative Example 2)

Molding evaluation was performed in the same manner as in Example 1 except that when dry-blending melt-blended pellets and long-fiber pellets, they were dry-blended such that the content of (F) the aminoether-type hindered amine light stabilizer (HALS) was 3 parts by weight based on 100 parts by weight of the total of the components (A) and (B). The evaluation results were summarized in Table 2.

### (Comparative Example 3)

Molding evaluation was performed in the same manner as in Example 1 except that when producing melt-blended pellets, a non-aminoether-type hindered amine light stabilizer (HALS) (Chimassorb 2020 FDL available from BASF Japan Ltd.) was added in place of (F) the aminoether-type hindered amine light stabilizer (HALS), and dry-blended such that the content of the non-aminoether-type hindered amine light stabilizer (HALS) was 0.3 parts by weight based on 100 parts by weight of the total of the components (A) and (B). The evaluation results were summarized in Table 2.

### (Comparative Example 4)

Molding evaluation was performed in the same manner as in Example 1 except that when producing melt-blended pellets, a benzoate light stabilizer (Tinuvin 120 available from BASF Japan Ltd.) was added in place of (F) the aminoether-type hindered amine light stabilizer (HALS), and dry-blended such that the content of the benzoate light stabilizer was 0.3 parts by weight based on 100 parts by weight of the total of the components (A) and (B). The evaluation results were summarized in Table 2.

### (Comparative Example 5)

Molding evaluation was performed in the same manner as in Example 1 except that the weight ratio of the components (A) to the components (B) contained in melt-blended pellets and long-fiber pellets ((A)/(B)) was 100/0. The evaluation results were summarized in Table 2.

### (Comparative Example 6)

Molding evaluation was performed in the same manner as in Example 1 except that the weight ratio of the components (A) to the components (B) contained in melt-blended pellets and long-fiber pellets ((A)/(B)) was 0/100. The evaluation results were summarized in Table 2.

### (Comparative Example 7)

Molding evaluation was performed in the same manner as in Example 1 except that when producing melt-blended pellets, a phosphorous flame retardant (FP-600 available from ADEKA CORPORATION) was added in place of (D) the brominated flame retardant and (E) the antimony oxide compound, and dry-blended such that the content of the phosphorous flame retardant was 5 parts by weight based on 100 parts by weight of the total of the components (A) and (B). The evaluation results were summarized in Table 2.

### (Comparative Example 8)

Molding evaluation was performed in the same manner as in Example 1 except that when producing melt-blended pellets, a phosphorous flame retardant (FP-600 available from ADEKA CORPORATION) was added in place of (D) the brominated flame retardant and (E) the antimony oxide compound, and dry-blended such that the content of the phosphorous flame retardant was 30 parts by weight based on 100 parts by weight of the total of the components (A) and (B). The evaluation results were summarized in Table 2.

**[Table 1]**

| | | | Units | Examples | | | | | | | | | | | |
|---|---|---|---|---|---|---|---|---|---|---|---|---|---|---|---|
| | | | | 1 | 2 | 3 | 4 | 5 | 6 | 7 | 8 | 9 | 10 | 11 | 12 |
| Composition | (A) | Polypropyrene | Parts by weight | 85 | 85 | 85 | 85 | 85 | 85 | 85 | 95 | 75 | 85 | 85 | 85 |
| | (B) | Modified-polypropyrene | | 15 | 15 | 15 | 15 | 15 | 15 | 15 | 5 | 25 | 15 | 15 | 15 |
| | (C) | Carbon fiber | | 30 | 30 | 60 | 30 | 30 | 30 | 30 | 30 | 30 | 30 | 30 | 30 |
| | (D) | Brominated flame retardant | | 5 | 5 | 5 | 2 | 20 | 5 | 5 | 5 | 5 | 5 | 0.5 | 5 |
| | | Phosphorous flame retardant | | - | - | - | - | - | - | - | - | - | - | - | - |
| | (E) | Antimony trioxide | | 2.5 | 2.5 | 2.5 | 1 | 10 | 2.5 | 2.5 | 2.5 | 2.5 | 2.5 | 0.25 | 2.5 |
| | (F) | NOR-type hindered amine light stabilizer | | 0.3 | 0.3 | 0.3 | 0.3 | 0.3 | 0.05 | 1.5 | 0.3 | 0.3 | 0.3 | 0.3 | 0.3 |
| | | Non-NOR-type hindered amine light stabilizer | | - | - | - | - | - | - | - | - | - | - | - | - |
| | | Benzoate light stabilizer | | - | - | - | - | - | - | - | - | - | - | - | - |
| | (G) | Ultraviolet absorber | | - | - | - | - | - | - | - | - | - | 0.3 | - | 2 |
| Properties | | Flexural strength | MPa | 226 | 225 | 273 | 213 | 196 | 210 | 192 | 202 | 229 | 225 | 230 | 223 |
| | | Charpy impact strength | kJ/m² | 11.1 | 12.0 | 17.8 | 12.1 | 9.7 | 11.6 | 8.9 | 12.5 | 10.5 | 11.8 | 12.9 | 11.7 |
| | | Flame resistance (Note 1) | | b | b | b | c | a | b | a | b | b | a | c | a |
| | | Weather resistance (Note 2) | | a | a | a | a | a | b | a | a | a | a | a | a |

| | | | | | | | | | | | | | | | |
|---|---|---|---|---|---|---|---|---|---|---|---|---|---|---|---|
| (Note 1) a: After ignition by bringing a flame into contact, the flame was self-extingushed in 30 seconds. b: After ignition by bringing a flame into contact, the flame was self-extingushed in 30 seconds to 3 minutes. c: After ignition by bringing a flame into contact, the flame was self-extingushed in 3 to 7 minutes. f: The flame was not self-extinguished, or the flame was spread to the marked line in 7 minutes after ignition. (Note 2) a: No cracks or roughening of the surface. b: Countable numbers of cracks occur, but the surface texture is kept smooth. c: Microscope cracks occur over the whole test piece surface, and the surface texture is coarse. Carbon fibers are not exposed. f: Innumerable cracks occur all over the test piece surface, and carbon fibers on the surface are exposed. | | | | | | | | | | | | | | | |

**[Table 2]**

| | | | Units | Comparative Examples | | | | | | | |
|---|---|---|---|---|---|---|---|---|---|---|---|
| | | | | 1 | 2 | 3 | 4 | 5 | 6 | 7 | 8 |
| Composition | (A) | Polypropyrene | Parts by weight | 85 | 85 | 85 | 85 | 100 | - | 85 | 85 |
| | (B) | Modified-polypropyrene | | 15 | 15 | 15 | 15 | - | 100 | 15 | 15 |
| | (C) | Carbon fiber | | 30 | 30 | 30 | 30 | 30 | 30 | 30 | 30 |
| | (D) | Brominated flame retardant | | 5 | 5 | 5 | 5 | 5 | 5 | - | - |
| | | Phosphorous flame retardant | | - | - | - | - | - | - | 5 | 30 |
| | (E) | Antimony trioxide | | 2.5 | 2.5 | 2.5 | 2.5 | 2.5 | 2.5 | - | - |
| | (F) | NOR-type hindered amine light stabilizer | | - | 3 | - | - | 0.3 | 0.3 | 0.3 | 0.3 |
| | | Non-NOR-type hindered amine light stabilizer | | - | - | 0.3 | - | - | - | - | - |
| | | Benzoate light stabilizer | | - | - | - | 0.3 | - | - | - | - |
| | (G) | Ultraviolet absorber | | - | - | - | - | - | - | - | - |
| Properties | | Flexural strength | MPa | 221 | 201 | 224 | 222 | 165 | 223 | 220 | 162 |
| | | Charpy impact strength | kJ/m² | 10.9 | 9.4 | 11.4 | 11.2 | 12.2 | 5.5 | 11.0 | 8.9 |
| | | Flame resistance ^{(Note1)} | | c | f | c | c | b | c | f | b |
| | | Weather resistance ^{(Note 2)} | | f | a | f | f | a | f | a | a |

| | | | | | | | | | | | |
|---|---|---|---|---|---|---|---|---|---|---|---|
| (Note 1) a: After ignition by bringing a flame into contact, the flame was self-extingushed in 30 seconds. b: After ignition by bringing a flame into contact, the flame was self-exingushed in 30 seconds to 3 minutes. c: After ignition by bringing a flame into contact, the flame was self-extingushed in 3 to 7 minutes. f. The flame was not self-extinguished, or the flame was spread to the marked line in 7 minutes after ignition. (Note 2) a: No cracks or roughening of the surface. b: Countable numbers of cracks occur, but the surface texture is kept smooth. c: Microscope cracks occur over the whole test piece surface, and the surface texture is coarse. Carbon fibers are not exposed. f. Innumerable cracks occur all over the test piece surface, and carbon fibers on the surface are exposed. | | | | | | | | | | | |

It should be noted that in Table 1 and Table 2, "NOR-type" represents aminoether-type, and "non-NOR-type" represents non-aminoether-type.

### INDUSTRIAL APPLICABILITY

The carbon fiber reinforced polypropylene resin composition, the molding material, and the molded article according to the present invention have good flame resistance and weather resistance as well as excellent mechanical properties such as flexural properties and impact resistance, and, therefore, are extremely useful for various parts/members such as parts, internal members, and housings of electrical and electronic equipment, office automation equipment, household electrical appliances, and automobiles.

## Claims

1. A carbon fiber reinforced polypropylene resin composition obtained by blending based on 100 parts by weight of the total of (A) a polypropylene resin and (B) a modified-polypropylene resin with components (C) to (G) below:
(C) carbon fibers: 8 to 70 parts by weight;
(D) a brominated flame retardant: 0.4 to 25 parts by weight;
(E) an antimony oxide compound: 0.2 to 12.5 parts by weight;
(F) an aminoether-type hindered amine light stabilizer (HALS): 0.05 to 2 parts by weight; and
(G) an ultraviolet absorber: 0.05 to 2 parts by weight.

2. The carbon fiber reinforced polypropylene resin composition according to claim 1, wherein the weight ratio of the component (A) to the component (B) ((A)/(B)) is 95/5 to 75/25.

3. A molding material obtained by dry-blending a pellet, which is obtained by melt-blending (A) a polypropylene resin, (B) a modified-polypropylene resin, (D) a brominated flame retardant, (E) an antimony oxide compound, (F) an aminoether-type hindered amine light stabilizer (HALS), and (G) an ultraviolet absorber, with a long-fiber pellet containing (A) the polypropylene resin, (B) the modified-polypropylene resin, and (C) carbon fibers, wherein the content of the components (C) to (G) in the molding material after dry-blending is in the following ranges based on 100 parts by weight of the total of the components (A) and (B):
(C) the carbon fibers: 8 to 70 parts by weight;
(D) the brominated flame retardant: 0.4 to 25 parts by weight;
(E) the antimony oxide compound: 0.2 to 12.5 parts by weight;
(F) the aminoether-type hindered amine light stabilizer (HALS): 0.05 to 2 parts by weight; and
(G) the ultraviolet absorber: 0.05 to 2 parts by weight,
the long-fiber pellet being a pellet in which fibers are aligned substantially parallel to the longer direction of the pellet and the fiber length in the pellet is equal to or more than the pellet length, or
a molding material obtained by coating (C) carbon fibers with a polypropylene resin composition obtained by melt-blending (A) a polypropylene resin, (B) a modified-polypropylene resin, (D) a brominated flame retardant, (E) an antimony oxide compound, (F) an aminoether-type hindered amine light stabilizer (HALS), and (G) an ultraviolet absorber, wherein the content of the components (C) to (G) in the molding material after coating is in the following ranges based on 100 parts by weight of the total of the components (A) and (B):
(C) the carbon fibers: 8 to 70 parts by weight;
(D) the brominated flame retardant: 0.4 to 25 parts by weight;
(E) the antimony oxide compound: 0.2 to 12.5 parts by weight;
(F) the aminoether-type hindered amine light stabilizer (HALS): 0.05 to 2 parts by weight; and
(G) the ultraviolet absorber: 0.05 to 2 parts by weight.

4. A molded article obtained by molding the molding material according to claim 3.

## Patentansprüche

1. Kohlenstofffaserverstärkte Polypropylenharzzusammensetzung, erhalten durch Mischen, basierend auf 100 Gewichtsteilen der Gesamtmenge von (A) einem Polypropylenharz und (B) einem modifizierten Polypropylenharz mit den folgenden Komponenten (C) bis (G):
(C) Kohlenstofffasern: 8 bis 70 Gewichtsteile;
(D) ein bromiertes Flammschutzmittel: 0,4 bis 25 Gewichtsteile;
(E) eine Antimonoxidverbindung: 0,2 bis 12,5 Gewichtsteile;
(F) ein gehindertes Amin als Lichtschutzmittel (HALS) vom Aminoethertyp: 0,05 bis 2 Gewichtsteile; und
(G) ein Ultraviolettabsorber: 0,05 bis 2 Gewichtsteile.

2. Kohlenstofffaserverstärkte Polypropylenharzzusammensetzung nach Anspruch 1, wobei das Gewichtsverhältnis der Komponente (A) zur Komponente (B) ((A)/(B)) 95/5 bis 75/25 beträgt.

3. Formmasse, erhalten durch Trockenmischen eines Pellets, erhalten durch Schmelzmischen von (A) einem Polypropylenharz, (B) einem modifizierten Polypropylenharz, (D) einem bromierten Flammschutzmittel, (E) einer Antimonoxidverbindung, (F) einem gehinderten Amin als Lichtschutzmittel (HALS) vom Aminoethertyp, und (G) einem Ultraviolettabsorber, mit einem Langfaserpellet, das (A) das Polypropylenharz, (B) das modifizierte Polypropylenharz und (C) Kohlenstofffasern enthält, wobei der Gehalt der Komponenten (C) bis (G) in der Formmasse nach dem Trockenmischen in den folgenden Bereichen liegt, bezogen auf 100 Gewichtsteile der Gesamtmenge der Komponenten (A) und (B):
(C) die Kohlenstofffasern: 8 bis 70 Gewichtsteile;
(D) das bromierte Flammschutzmittel: 0,4 bis 25 Gewichtsteile;
(E) die Antimonoxidverbindung: 0,2 bis 12,5 Gewichtsteile;
(F) das gehinderte Amin als Lichtschutzmittel (HALS) vom Aminoethertyp: 0,05 bis 2 Gewichtsteile; und
(G) der Ultraviolettabsorber: 0,05 bis 2 Gewichtsteile,
wobei das Langfaserpellet ein Pellet ist, bei dem die Fasern im Wesentlichen parallel zur längeren Richtung des Pellets ausgerichtet sind und die Faserlänge im Pellet gleich oder größer als die Pelletlänge ist, oder
Formmasse, erhalten durch Beschichten von (C) Kohlenstoffasern mit einer Polypropylenharzzusammensetzung, erhalten durch Schmelzmischen von (A) einem Polypropylenharz, (B) einem modifizierten Polypropylenharz, (D) einem bromierten Flammschutzmittel, (E) einer Antimonoxidverbindung, (F) einem gehinderten Amin als Lichtschutzmittel (HALS) vom Aminoethertyp, und (G) einem Ultraviolettabsorber, wobei der Gehalt der Komponenten (C) bis (G) in der Formmasse nach dem Beschichten in den folgenden Bereichen liegt, bezogen auf 100 Gewichtsteile der Gesamtmenge der Komponenten (A) und (B):
(C) die Kohlenstofffasern: 8 bis 70 Gewichtsteile;
(D) das bromierte Flammschutzmittel: 0,4 bis 25 Gewichtsteile;
(E) die Antimonoxidverbindung: 0,2 bis 12,5 Gewichtsteile;
(F) das gehinderte Amin als Lichtschutzmittel (HALS) vom Aminoethertyp: 0,05 bis 2 Gewichtsteile; und
(G) der Ultraviolettabsorber: 0,05 bis 2 Gewichtsteile.

4. Formkörper, erhalten durch Formen der Formmasse nach Anspruch 3.

## Revendications

1. Composition de résine de polypropylène renforcée de fibres de carbone, obtenue par mélange sur la base de 100 parties en poids du poids total (A) d'une résine de polypropylène et (B) d'une résine de polypropylène modifié avec les composants (C) à (G) suivants :
(C) des fibres de carbone : 8 à 70 parties en poids ;
(D) un retardateur de flamme bromé : 0,4 à 25 partie(s) en poids ;
(E) un composé d'oxyde d'antimoine : 0,2 à 12,5 partie(s) en poids ;
(F) un photostabilisant à base d'amine à encombrement stérique (HALS) de type aminoéther : 0,05 à 2 partie(s) en poids ; et
(G) un absorbant d'ultraviolet : 0,05 à 2 partie(s) en poids.

2. Composition de résine de polypropylène renforcée de fibres de carbone selon la revendication 1, dans laquelle le rapport pondéral du composant (A) au composant (B) ((A)/(B)) est compris entre 95/5 et 75/25.

3. Matériau de moulage obtenu en mélangeant à sec une pastille, qui est obtenue en mélangeant à l'état fondu (A) une résine de polypropylène, (B) une résine de polypropylène modifié, (D) un retardateur de flamme bromé, (E) un composé d'oxyde d'antimoine, (F) un photostabilisant à base d'amine à encombrement stérique (HALS) de type aminoéther, et (G) un absorbant d'ultraviolet, avec une pastille à fibres longues contenant (A) la résine de polypropylène, (B) la résine de polypropylène modifié, et (C) des fibres de carbone, où la teneur en composants (C) à (G) dans le matériau de moulage après un mélange à sec est comprise dans les plages suivantes sur la base de 100 parties en poids du poids total des composants (A) et (B) :
(C) les fibres de carbone : 8 à 70 parties en poids ;
(D) le retardateur de flamme bromé : 0,4 à 25 partie(s) en poids ;
(E) le composé d'oxyde d'antimoine : 0,2 à 12,5 partie(s) en poids ;
(F) le photostabilisant à base d'amine à encombrement stérique (HALS) de type aminoéther : 0,05 à 2 partie(s) en poids ; et
(G) l'absorbant d'ultraviolet : 0,05 à 2 partie(s) en poids,
la pastille à fibres longues étant une pastille dans laquelle des fibres sont alignées sensiblement parallèlement à la direction la plus longue de la pastille et la longueur de fibres dans la pastille est supérieure ou égale à la longueur de pastille, ou
un matériau de moulage obtenu en revêtant (C) des fibres de carbone d'une composition de résine de polypropylène obtenue en mélangeant à l'état fondu (A) une résine de polypropylène, (B) une résine de polypropylène modifié, (D) un retardateur de flamme bromé, (E) un composé d'oxyde d'antimoine, (F) un photostabilisant à base d'amine à encombrement stérique (HALS) de type aminoéther, et (G) un absorbant d'ultraviolet, où la teneur en composants (C) à (G) dans le matériau de moulage après le revêtement est comprise dans les plages suivantes sur la base de 100 parties en poids du poids total des composants (A) et (B) :
(C) les fibres de carbone : 8 à 70 parties en poids ;
(D) le retardateur de flamme bromé : 0,4 à 25 partie(s) en poids ;
(E) le composé d'oxyde d'antimoine : 0,2 à 12,5 partie(s) en poids ;
(F) le photostabilisant à base d'amine à encombrement stérique (HALS) de type aminoéther : 0,05 à 2 partie(s) en poids ; et
(G) l'absorbant d'ultraviolet : 0,05 à 2 partie(s) en poids.

4. Article moulé obtenu par moulage du matériau de moulage selon la revendication 3.
